# EUROPEAN PATENT APPLICATION

(11) **EP 1 280 086 A1**
(43) Date of publication of application: **29.01.2003**
(21) Application number: 02254755.8
(22) Date of filing: 08.07.2002
(51) Int. Cl.: G06F 17/60

(54) **System and method for managing consumer purchasing data**

(30) Priority: 25.07.2001 US 916030
(71) Applicant: Hewlett-Packard Company, Palo Alto, CA 94304 (US)
(72) Inventor: Messner, Amy E., Eugene, OR 97408 (US); Goldhaber, F.I., Corvallis, OR 97330 (US); Rogers, Janon T., Corvallis, OR 97330 (US)
(74) Representative: Jackson, Richard Eric

(57) **Abstract**

Consumer preferences can be structured into a profile (600) that specifies by certain objective criteria, the characteristics of items to be purchased. Database records of items in inventory are structured to record the criteria used to identify products. Consumer preferences that specify items using objective criteria can be sorted and based upon the outcome of such a sort, items that comport with the preferences can be identified for purchase by the consumer.

## Description

### FIELD OF THE INVENTION

This invention relates to a system and method for collecting, analyzing and using consumer purchasing data. More particularly, the invention relates to a system and method for collecting consumer purchasing lists and purchasing preferences, transmitting those preferences to a vendor that can allocate inventory for items on the lists and improve inventory control by sharing the lists with a manufacturer.

### BACKGROUND OF THE INVENTION

The Internet has enabled all types of businesses to offer goods and services for sale on-line. It is now possible to purchase virtually any type of goods or services on-line which previously were sold only in so-called brick and mortar establishments. Even food and groceries can now be purchased on-line by logging onto shopping service providers' websites such as www.webvan.com or www.peapod.com and there browsing through a virtual grocery store using a virtual shopping basket to select items that are paid for on-line with a credit card and delivered to your door.

One problem with prior art Internet grocery shopping services is their lack of ability to match consumer preferences to available inventory in a retailer's establishment as well as the ability to "up sell" premium products and cross-sell related products. Unlike a visit to a grocery store where item specials are displayed for maximum exposure, on-line shopping usually only presents to the user what the user specifically asks to see. Prior art on-line shopping services attempt to match a user's specific request to what is available in inventory and if a consumer-specified item is not available in inventory, is not available at a price that a consumer is willing to pay, or is not precisely what the consumer asks for, prior art systems for on-line shopping do not try to correlate what a consumer might accept as a substitute therefore and increase a retailer's sales volume while providing to the consumer, equally-acceptable goods or services facilitating the consumer's completion of an arduous task. A method and system to cross-sell or up sell goods and services that are of interest to a consumer, as well as items that might only relate to a consumer's list of required purchases might provide enhanced sales volume, better inventory management and enhanced revenue as well as an improved on-line shopping experience.

### SUMMARY OF THE INVENTION

There is provided a method and system for obtaining via a data network transmission, consumer purchasing data in the form of lists; matching items in inventory to items on (or in) the lists. Inventory can be controlled by sharing purchase data with vendors and suppliers by way of data network transmissions. Specific items that a consumer (or other purchaser) wants to purchase as well as descriptions or characteristics of items to purchase are matched to items in inventory, marked for sale (or sold) and inventory adjusted as needed.

### BRIEF DESCRIPTION OF THE DRAWINGS

Figure 1 is a simplified block diagram of a data transmission network, such as the Internet, by which consumers, retailers and manufacturers can exchange data.
Figure 2 is a simplified block diagram of a transmission network between a consumer, a retailer, and manufacturer by which preference profiles and purchasing lists are exchanged.
Figures 3A - 3C are a flow chart showing the steps of a method by which on-line purchases can be made, inventory tracked and updated on a real time basis.
Figure 4 is a simplified flow diagram of the steps of a method by which a manufacturer can track inventory in response to purchasing preferences and purchasing lists.
Figure 5 is a simplified flow diagram of an alternate embodiment by which a consumer's list or preference items can be correlated with items in inventory.
Figure 6 is a simplified representation of a data record of an inventory item and various fields therein.
Figure 7 is a simplified block diagram representation of the interior of a retail merchant depicting distributed locations of various items stored therein.
Figure 8 is a simplified block diagram of functional elements of a kiosk or data terminal for use in a retail sales establishment in accordance with the preferred embodiment.
Figures 9 and 10 depict simplified representations of ASCII text files of a consumer's purchasing profile, also referred to herein as a purchasing preference list and purchasing preference profile.

### DETAILED DESCRIPTION OF A PREFERRED EMBODIMENT

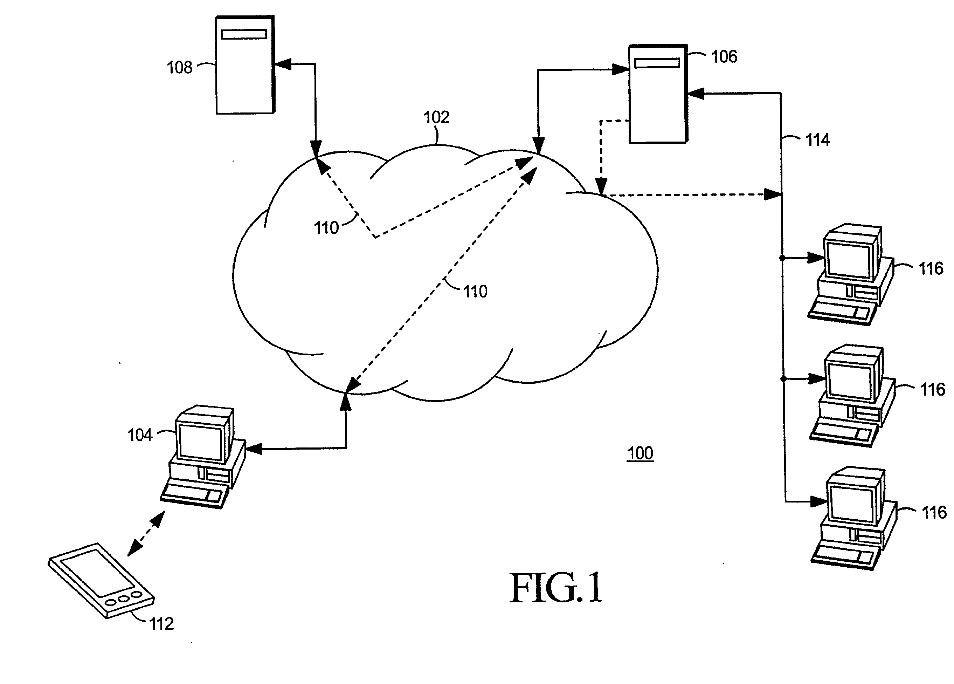

Figure 1 shows a simplified block diagram of a system 100 for collecting and managing consumer purchasing data (not shown in Figure 1). The system 100 makes use of a data transfer network 102 (also referred to as a "data network"), such as the Internet (or other networks including intranets, local area networks or wide area networks, all of which are known to those skilled in the art) to carry data signals between computers (104, 106, 108) owned or operated by a consumer 104, a retailer or merchant 106, and a manufacturer or supplier 108 to the retailer.

A consumer's computer 104 having access to the Internet 102 exchanges data signals (represented by the broken lines identified by reference numeral 110) with the computer of a merchant 106 which might be a retail grocer or other business entity that sells or transacts business on-line. (The provision of Internet access to a computer is not shown in Figure 1 but well known to be via an Internet Service Provider, such as America Online or "AOL" Prodigy and virtually innumerable others as well as a physical access device including a modem or Ethernet adapter and transmission media.)

Data signals 110 represented in Figure 1 and which are sent from the consumer 104 to one or more retailers 106 represent a file or list of items (one or more items) that the consumer specifically wants to purchase. Other data signals 110 from a consumer represent a second type of file or list of items that generically describes or specifies a consumer's purchasing preference(s) albeit without mandating any particular item using any one or more specific criteria.

The first of the aforementioned files or lists identifies items that a consumer (or other purchaser) needs or specifically requires. Items on such a list would include goods or services for which the purchaser will not accept a reasonable substitute. The second of the aforementioned files or lists identifies items that a consumer needs or requires but the items on the second type of list are by the purchaser's preferences. The notion of preferences is discussed more fully below.

The data signals 110 from the consumer's computer 104 are processed by the retailer's computer 106 so as to match up items on the received lists from the consumer to items in inventory as part of the sale of items on or described in the list(s) as part of a sale to the consumer. In identifying "lists" as being sent or received, it should be understood herein and for purposes of claim construction that two or more lists need not be sent. In some instances, only the list of consumer *preferences* will be transferred; in other instances only the list of required items will be transferred, however, in many instances both the list of preferences and of required items will both be transferred from a purchaser to a vendor (retailer or other seller).

As shown in Figure 1, the data signals 110 from the consumer are typically received at a server computer which acts as a central node or processing hub (one or more computers, work stations or the like equivalents) through which inventory, sales and other transactions are handled for a seller. The data signals 110 can also be distributed to other computers of the retailer or merchant through another data network such as in Intranet, local area network (LAN) or wide area network (WAN) (not shown) or the Internet by which the data identifying items to be purchased can be sent to other computers 116 that might be used in remote venues, such as different stores. By sending the identity of items to be purchased to other stores, a retailer can provide other services.

In any inventory control system shrinkage and miscounting will almost always occur. Moreover, it is not always possible to update records in one computer with data on sales transactions that is stored or kept in another computer. By sending the consumer purchasing lists to multiple stores or purchasing venues where inventory data is presumably more available and more accurate, and by retrieving or reading from those other stores, a determination as to whether items are actually in stock or available for purchase, it is possible to identify one or more stores or locations where items on the aforementioned lists can be found, if by chance one or more items in the lists are sold out or unavailable from another store. In an instance where a particular store is lacking several items required or requested by a purchaser but another facility has most or all of the purchaser's requested items, the sellers computer 106 can direct the purchaser to the particular store or facility whereat the goods to purchased are located or most likely to be found. In another instance, a seller might steer or direct purchasers to stores having overstocked merchandise. In so doing, a retailer can move inventory as quickly as possible while providing to the purchaser what might be touted as total customer satisfaction by the provision of all of a customer's needs. Directing a purchaser to a particular store, warehouse or sales venue whereat a particular item or items can be obtained is readily accomplished using data records of inventory items in each store and identifying when a particular store or stores have exhausted inventory and thereafter directing the purchaser to the store where the goods can be obtained.

Sales transactions are accomplished via the Internet 102 by the consumer's computer 104 sending purchasing data 110 to retailer or merchant computers 106. The purchasing data identifies or suggests certain items to be purchased by the purchaser/consumer. Items that are identified to the retailer computer 106 are determined to be in stock or out of stock using data base inventory records. Data base records of inventory are appropriately decremented as items are purchased and at virtually the same time, notification is sent to a manufacturer's computer 108. Manufacturer's sales incentives, (e.g., coupons, rebates, discounts) that are offered can be sent back to the retailer's computer 106 and provided to the purchaser, enabling the manufacturer to plan ahead the delivery of replacement inventory to the retailer.

The information supplied by the consumer's computer 104 can in one embodiment originate from a personal digital assistant (PDA) 112. PDAs can provide a variety of user interfaces, including handwriting recognition, which is considered part of the PDA 112.. Two-way infrared signals between the PDA 112 and a computer 104, well known in the art, enable the PDA to act as a de facto terminal to the computer 104. For purposes of claim construction, wireless data transmission mechanisms that use radio or infrared signals should also be considered to be another form of "data network" in that data can be exchanged between data senders and data receivers.

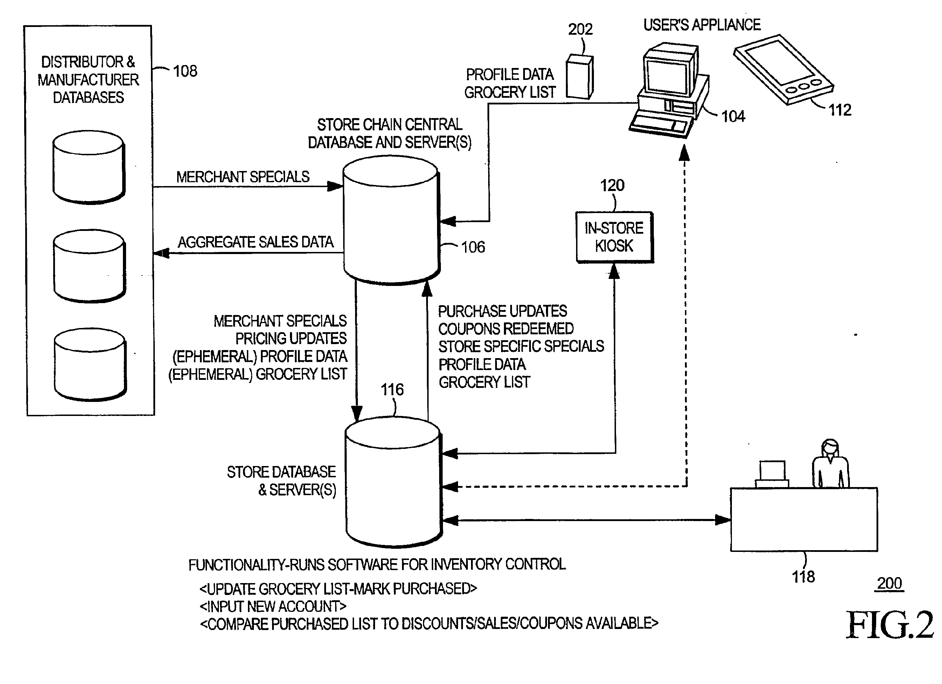

Figure 2 shows a more detailed depiction of a system for managing consumer purchasing data 200. A data network interface 202 such as a modem as well as a Internet access provider, operatively couples a consumer's home computer 104 or PDA 112 to one or more computer and storage devices 106 (one shown) of a retailer via a data network (not shown in Figure 2 but depicted in Figure 1). In the preferred embodiment, the invention finds particular application to business transactions between consumers and grocers (either independent retailers or chain store operators) and between grocers and the wholesalers, manufacturers or distributors from which a grocer typically obtains inventory. The invention also finds application to other business transactions, including so-called business-to-business transactions wherein the computer 104 might be that of a manufacturer and the computers 106 are computers for suppliers to the manufacturer. For purposes of this disclosure however, the preferred embodiment contemplates use with a consumer, grocer and a grocer supplier and the description hereinafter is in connection with such an application.

The retailer's computer 106 and associated storage equipment (disk drives, random access memory, mag tape) depicted in Figure 2 can include one or more distributed or cooperating processing units (not shown) well known to those skilled in the art. Such machines can include one or more microprocessors or work stations. capable of conducting and maintaining electronic communications via a data network but also for accessing and manipulating data such as the lists that are received from the consumer's computer 104.

Among other things, the computer for a retailer 106 performs the function of comparing items in a consumer's lists of required or specified items to purchase, to items in the retailer's inventory and generating from this first comparison, a "second" list of items in inventory that are on the consumer's "first" list. The retailer's computer 106 performs the function of logically "marking" items on the second list for the consumer's purchase. (Stated alternatively, the computer 106 can reserve in stock inventory for the purchaser, insuring that when the consumer visits the store, the items he or she wants will be there.) The inventory data base tally of items in stock can be used to timely obtain re-stocking.

The computer 106 also reads the consumer-specified preferences list, which can be considered to be a "profile" discussed hereinafter, which describes criteria or characteristics or factors by which a consumer can identify items to purchase. The computer 106 uses the preference list (the consumer's profile) to generate additional entries to the aforementioned "second" list and can mark such items for the consumer and adjust inventory tallies as well.

Using procedures described hereinafter, the retailer's computer prepares what can be considered a "third" list of items for the retail consumer to purchase when he or she visits the store. The "third" list of items that were either: 1) on the consumer specified list or 2) compliant with the user-preferences list or both 1) and 2), can be sent to the consumer's computer 104 or PDA 112, an in-store kiosk 120 (discussed below) or an in-store computer or terminal 118 to be used by the consumer at the time that the consumer actually visits the store. This "third" list can also be distributed to multiple locations via the data network, providing the consumer a choice as to which store to shop at. As mentioned below, the third list can have its entries sorted a number of ways but perhaps most advantageously items on the list are sorted by the placement or location of the items in a store.

Retailer and manufacturer (wholesaler or distributor as well) inventory management and enhanced sales are realized using the invention described herein by implementation and usage of a consumer preference list in combination with possibly another list of required purchase items. In this disclosure, the terms "user preference list" and "user profile" are considered to be objective criteria or characteristics, the compliance with which can be used by a computer to identify one or more particular items that a consumer wishes to purchase. By way of example, a consumer preference list can specify an item that the consumer wants to purchase, by criteria such as manufacturer brand name, product name, size and packaging (e.g. H. J. Heinz™, Hunts™ or Del Monte™ ketchup in 48 oz. plastic bottles.). Such objective characteristics can be used by a computer to specify items for the consumer to purchase, presuming of course that inventory items are recorded in a data base having such information available to the computer 106. The degree of specificity of criteria in a user preference list will vary according to the items being purchased.

In another example, a consumer might specify that he or she needs or wants to buy an inkjet printer cartridge, for a particular inkjet printer that was manufactured by the Hewlett-Packard Company. The preference list for an ink jet printer print cartridge would therefore identify that the consumer wants an inkjet printer cartridge for a printer manufactured by Hewlett-Packard Company, the printer model number and whether ink or color cartridge was wanted. In yet another example, a consumer preference list item for condiments could include a specification for any size of yellow mustard in plastic containers of between 12 and 24 ounces but at the lowest available in-store price. Another preference list could include a specification for the lowest-priced ketchup available and two pounds of the leanest ground beef-available at a price not to exceed a particular price per pound.

While the consumer preference list specification for the inkjet printer cartridge is very specific, the consumer preference specification for the yellow mustard and ketchup are generic. Upon the receipt of the preference lists, a retailer will be able to virtually fill a consumer's shopping list by determining whether or not the particular inkjet cartridge was in stock, regardless of price, and determining the lowest price of yellow mustard and the lowest price of red ketchup in stock and making them available for purchase by the consumer. The shopping list can be literally filled by allocating in stock items to the consumer (precluding their sales to someone else) and as inventory is depleted, electronically ordering replenishment from suppliers.

By using objective criteria or specifications as the customer preference shopping list, a consumer can formulate a list of items required or needed for purchase by their characteristics, without having to tediously specify each and every individual item for purchase by brand name, size, packaging or price. A consumer can also avoid the all-too-frequent occurrence of selectively accepting or rejecting items in response to unknown variables such as price, item size and manufacturers brand name when actually visiting the store. An on-line shopping experience can be enhanced by using objective criteria to purchase items instead of having to scroll through countless unrelated items in the process of selecting items to buy.

The user-specified preference list is formulated as a user profile. Personalized information retrieval according to user profiles is disclosed in U.S. Patent No. 5,761,662 to Dasan filed May 8, 1997 and issued June 2, 1998. User profiles are (or can be) ASCII text files that include delimiters and control characters that together identify specifications or identifications of certain things or objects and that the entries in these files can be used to define or specify items of interest to an individual based upon the information in the ASCII strings of the file.

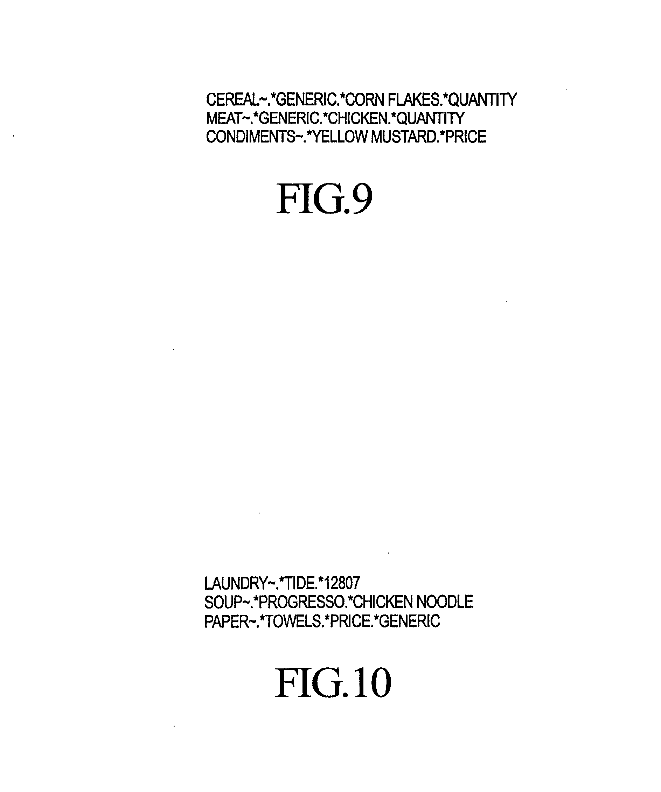

Text and/or control characters of a user profile, identifies particular publications for retrieval by computer by the identification of the publications identified by the ASCII text strings and certain predetermined delimiting characters. A data structure can also be used to describe or characterize items to be included in a grocery (or other type) shopping list examples of which are depicted in Figures 9 and 10.

Figure 9 depicts an example of a user profile, similar to user profiles used in the prior art, such as the aforementioned '662 patent. The Figure 9 profile identifies breakfast cereals however, the user profile of Figure 9 (also referred to herein as a customer-specified purchase preference list, identifies cereals of any brand of cornflakes. When the Figure 9 profile entries are read by the grocer's computer 106, the computer 106 can cross reference items (read) in a database 116 of items carried in the store inventory which match (literally or equivalently) the specifications set forth in the profile. A subsequent entry in the profile (preference list) of Figure 9 specifies that the consumer wishes to purchase yellow mustard without regard to brand name albeit at the lowest available price.

Figure 10 on the other hand requires the purchase of a consumer-specified item (128-oz Tide-brand laundry detergent, if it exists) without substitution. In addition to the laundry detergent the Figure 10 preference list (profile) specifies a purchase of a certain brand of chicken noodle soup and a quantity of paper towels. The paper towels are to be purchased at the lowest price available.

The notion of an individualized purchasing profile provides a mechanism for specifying items to purchase by specifying certain objective criteria (e.g., price, brand, color, packaging, cost, *inter alia.)* and allowing a processor to identify inventory items that comport with the criteria. Several criteria can be cascaded to more selectively identify items to purchase. By way of example, a cascade of user-specified preferences could identify for purchase: 1) the largest bottle of ketchup; 2) in a plastic container; 3) made by a certain manufacturer. Such a profile includes four distinctly different characteristics, each of which is readily discernible by a computer.

By using a user profile, as well as a consumer-specified list of required items (for which no substitute would be accepted), the method and system disclosed herein enables the retailer to yield more sales, increased profitability or providing an enhanced shopping experience for the consumer.

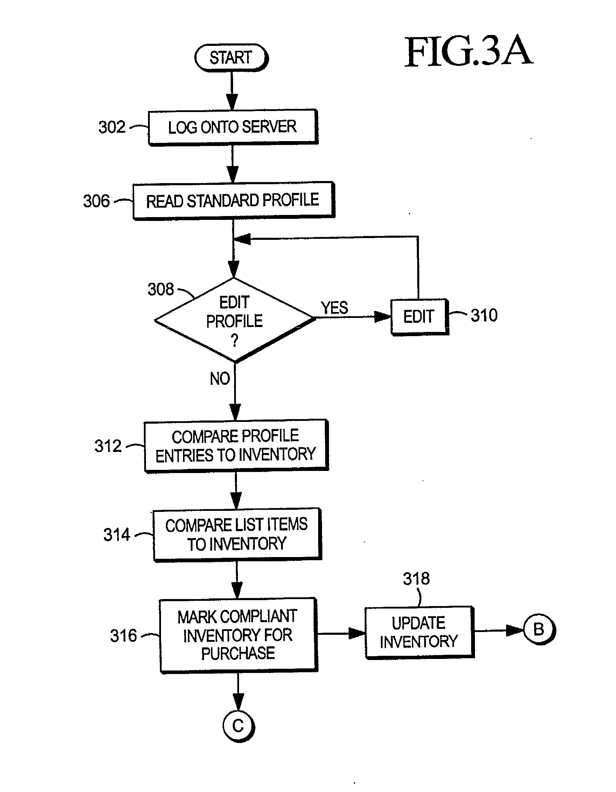

Figure 3A shows a simplified flow chart of steps of a method for managing consumer purchasing data so as to maximize sales opportunities, while providing an enhanced shopping experience to a consumer or other purchaser. The methodology steps shown in Figure 3A, 3B, 3C, Figure 4 and Figure 5 are with respect to the systems depicted in Figures 1 and 2.

In the preferred embodiment, a consumer (using his computer 104) logs onto the server 106 of a retailer by way of the data communications 110 accomplished via the data network 102. A login process by which the consumer can uniquely and unambiguously identify himself to the retailer will typically use a personal identification number, password, or some other unique identifier agreed upon between the consumer's computer 104 and the retailer's computer 106, all of which is known to those skilled in the art. The login process is nonetheless a prerequisite to establishing to the retailer's computer 106 that the party at the other end of the communication is a bona fide customer and that among things, payment will or can be reasonably expected to be received.

After the login process 302 is complete, and communications have been established between the consumer's computer 104 and the retailer's computer 106 in step 306 a new consumer or a new customer to the retailer's computer 106 will preferably read from memory of the retailer's computer a so-called standard profile or start-up profile in step 306. A so-called standard profile will preferably include a list of commonly-purchased items using a profile. A standard profile can establish a baseline consumer profile and reduce the time and effort required by a new customer to generate a completely new list of specific items to buy or a completely new list of criteria for a preference list of criteria that will identify by characteristics, items that are preferred by the consumer.

The standard profile read from the retailer's computer 106 in step 306 is transmitted to the consumer computer 104 via the data network 102 and displayed on the consumer's personal computer. In the likely event that the profile is not compliant with the consumer's preferred purchases, in step 308 provision is made to edit the profile in step 310 using a text editor.

Once the profile has been edited, meaning that the consumer has built out his list of item criteria by which certain items to be purchased are identified, the methodology compares the profile entries to actual inventory items in step 312 to determine if there is any match between any aspect of the customer's preference list specifications and that which is in inventory of the retailers 106.

In addition to generating a profile of items to purchase, the consumer can also specify a list of items that are required or must be purchased without substitution. In a sense such a list is a more specific user profile, however, for purposes of this disclosure, an unequivocal specification of an item by brand name is not subject to substitution, such as a more generic specification of certain characteristics.

In step 314, the method presumes that a consumer-specified list of required items has already been sent to the retailer's computer 106 from the consumer's computer 104. The list of items required to be purchased is also compared to the items in inventory in step 314.

Having sent to the retailer's computer 106 both a list of items that are required to be purchased and a list of items that are preferences or items for which substitutes can be selected, a list is generated in the retailer's computer of items that match either the profile or the required lists and there entry in this second list is considered to be a marking of the inventory item as compliant with one or both of the lists in step 316. Those skilled in the art will recognize that instead of creating a second list, a data base record can include a data base field can be edited by which the inventory items can be identified as compliant with the purchaser's requirements. In step 318, items that are on either the consumer's list of preferences or on the items that "must" be purchased are decremented from the retailer's inventory.

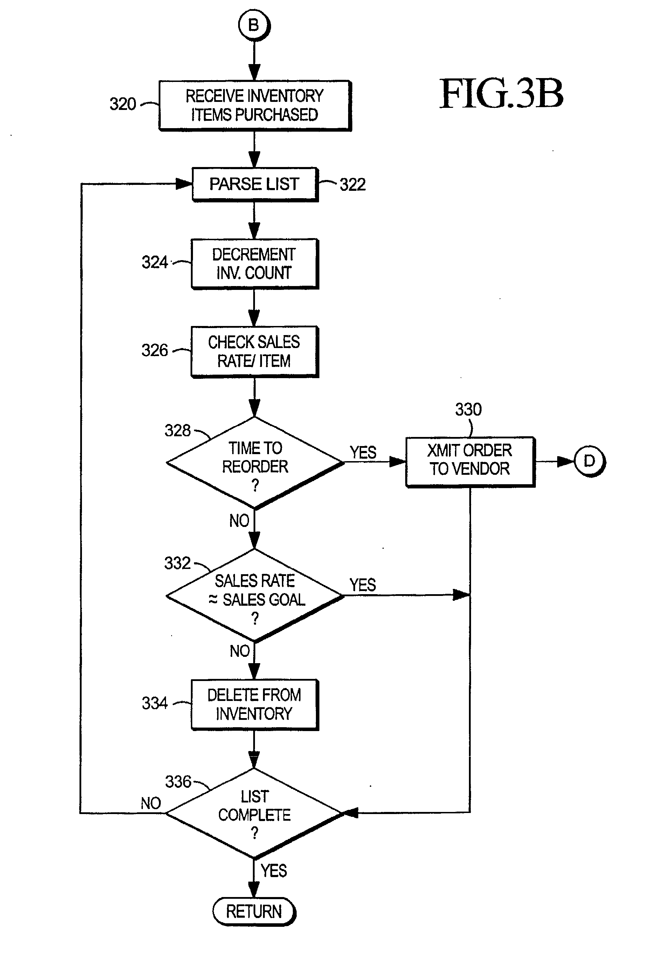

In Figure 3B there is a simplified description of the inventory management procedure for use by a retailer, which begins at step 320 whereat the list of items to be purchased is received by the retailer's computer 106 via the data network 102. The list of items in inventory that are either on the required purchases list or which satisfy the preference list are used to identify the various individual items on the lists. The individual items that are on the lists, at least some of which are presumably in inventory, are used to decrement the inventory count in step 324 thereby enabling the retailer to keep track of items actually in stock. As the count of items in an inventory remaining is decremented, it is possible to check the rate at which those items are leaving the store or the retailer's inventory and only to identify slow moving merchandise. In step 326, historical sales records of each particular item can be compared. In step 328 if the inventory decrement step reduces inventory on hand below some predetermined threshold, the retailer's computer 106 can generate a resupply order in step 330 which is transmitted to a vendor or manufacturer computer 108 via the data network on a just-in-time basis so that replenishing stocks can be obtained from the vendor or manufacturer before the supply of an inventory item is exhausted.

If in step 328 sufficient inventory still remains a comparison of the sales rate of an item can be calculated over time to spot sales rate trends for seasonal items or perishable items that might not be moving through inventory fast enough. In particular, sales items that do not move quickly or are out of season can be deleted from inventory by tracking the sales rate over time in step 332 and deleting items from inventory as appropriate in step 334.

The comparison of items on the consumer lists of purchased items and preferred items is repeated in step 336 until the list is exhausted thereby providing a retailer with improved inventory management using data that is received in real time from the consumer wishing to purchase certain items in inventory or which comply with customer specifications or descriptions. The real time on-line data obtained from a consumer that includes required items as well as preferences that define or specify certain criteria of products that are desired can enable a retailer to more closely control inventory as well as generate a user profile for the consumer..

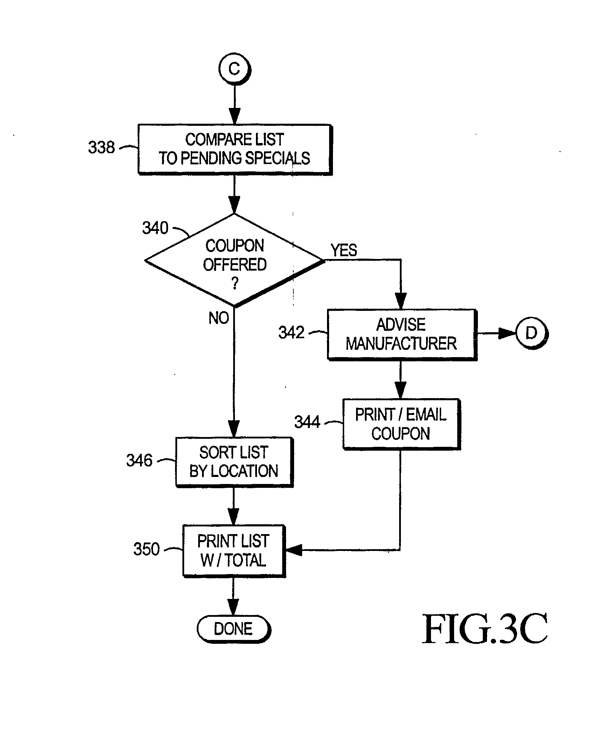

With respect to Figure 3A, upon the conclusion of step 316 wherein inventory items are marked as compliant with one or both of the lists, program flow transfers to the steps depicted in Figure 3C. In step 338, items on one or both of the lists received from the consumers are compared to inventory items that might have special purchasing incentives available to the consumer. Purchasing incentives or inducements such as coupons, rebates, or special offer terms are identified in step 340 and if available, the use of such items, if supplied or supported by the manufacturer are provided to the manufacturer directly in step 342. A coupon or other form or communication required to take advantage of the sales inducement can be printed or e-mailed to the consumer as appropriate in step 344.

If in step 340 no purchasing incentives are offered on the items or items on a list, the retailer's computer 106 can sort the items for purchase by the consumer by their location in a particular store further expediting the consumer's transaction with the retailer building customer loyalty and customer satisfaction. In step 346, the items on the purchase list are sorted by the arrangement of the layout in the establishment.

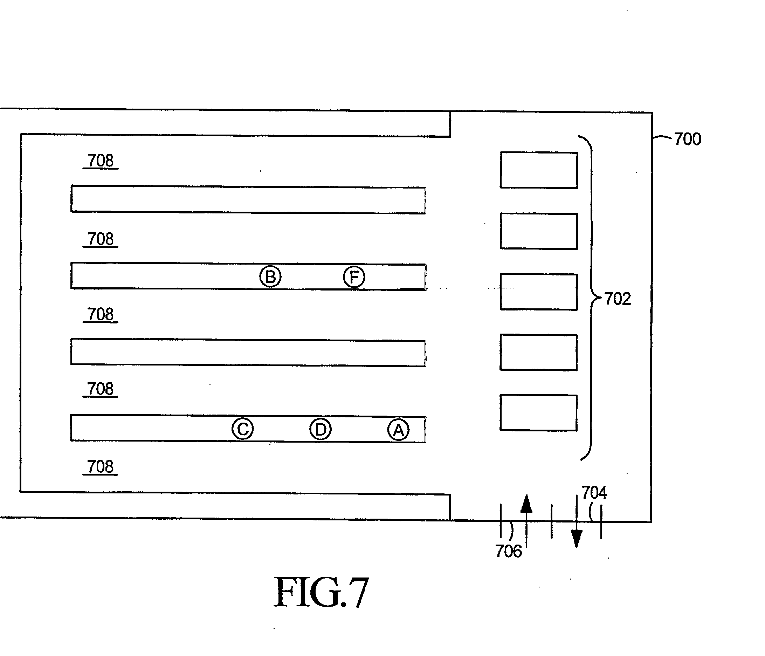

Figure 7 depicts a simplified block diagram with a floor plan of a retail sales establishment 700. In one area of the store, purchases may be completed by transactions at individual cash registers or cashiers 702. The cashiers or registers are located proximate to the exit of the store 704 and entrance 706 such that traffic through any of the aisles 708 naturally tends to end at one or more of the registers 702.

Upon entering a store 700 a purchaser might prefer to minimize the distance that he or she must walk to find the items in the store that comply with either the preference list or the required-purchases list. In order to minimize the consumer's travel, the items on the list of inventory items that comply with either the required purchase list or the preferences list can be sorted by the order of their placement in the store with respect to an entrance, exit or cashier. By ordering the items on the third list of items to purchase which are on at least one of the required purchase list or the preferences list, according to their location in the store floor plan 700 a consumer can enter the building at the entrance 706 proceed down the first corridor or aisle that has items A, D, and C. After picking up items A, D and C, the customer can proceed to another aisle 708 where items B and F, also on the list are located and then proceed through a cashier or checkout 702 to leave through the exit 704. In such a scenario, the items were ordered according to their location in the store in order to minimize the path length required to be followed to pickup all of the items to purchase. The total distance required by the consumer to traverse aisle in the order in which the items appear alphabetically is considerably greater than if the items on the list are ordered according to their appearance in the establishment.

Returning to Figure 3C at step 346 the items on the purchase list are sorted by their place in the store, the list can be printed or e-mailed to the consumer at his computer in step 350.

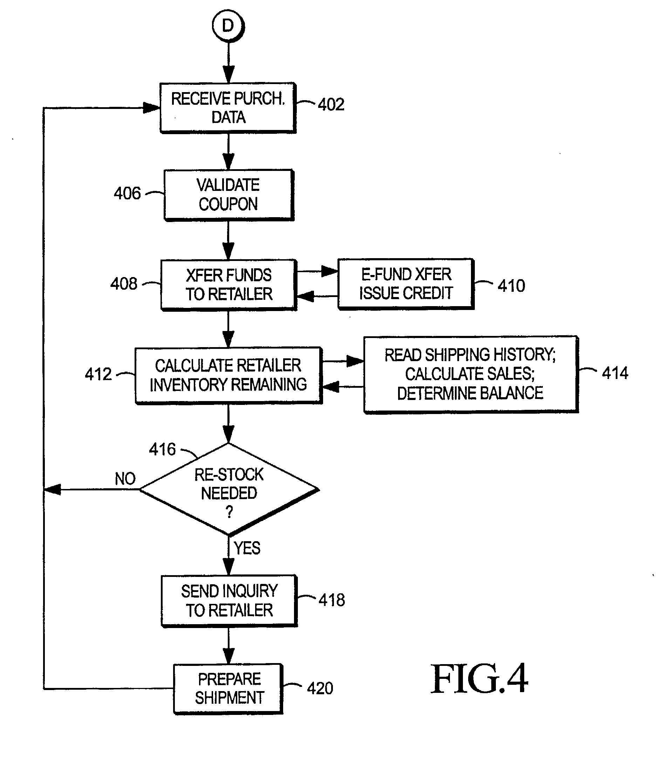

Figure 4 depicts a simplified representation of the steps of a method by which consumer purchasing data can be used by a manufacturer or supplier using the system depicted in Figure 1 and 2. From step 342 in Figure 3C, in step 402, purchasing data in the form of items on one or both of the lists is sent to the manufacturer's computer 108 via the data network 102. Items that are to be purchased by the consumer and which have a coupon or purchase incentive available from the manufacturer are validated in step 406 preferably by using the personal identification number of logon script provided by the consumer in step 302 of Figure 3A. An electronic funds transfer in step 408 expedites the reimbursement of purchasing incentive funds from the manufacturer to the vendor improving the cash flow of the retailer as an added inducement to his implementation of the system depicted in Figure 1 and 2.

In step 412 the items in the list to be purchased that were received in step 402 are used to calculate the amount of inventory remaining with the retailer using records of past shipments to the retailer by the manufacturer. Shipping history and prior sales buying in step 414 can be used to determine the amount of inventory remaining in the possession or custody of the retailer, but also to generate a user profile for a shopper. If in step 416 it is determined that the retailer is nearing or has depleted its inventory a confirmatory inquiry in step 418 can be used prior to preparation of a re-stocking shipment in step 412. At step 416 if it was determined that the retailer should have a sufficient amount of inventory remaining, program flow can return to step 402 to await the next delivery of purchasing information for the next consumer using the on-line method and system for collecting and processing consumer purchasing data.

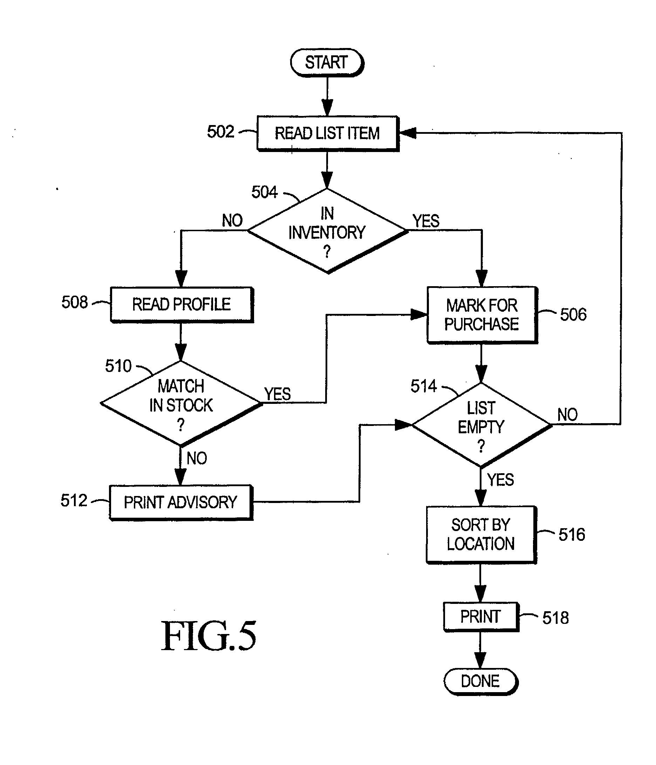

Figure 5 depicts a simplified methodology by which a retailer's computer 106 can manage consumer purchasing data to expedite sales and facilitate a consumer's purchasing experience. In step 502, the purchaser's preference list or purchaser's required list is read by the retailer's computer 106. Items in inventory are compared to the items on the list in step 504 such that items in inventory are marked for purchase in step 506. Items that may not be on the purchase list and not in inventory can be compared against the user profile in step 508 to determine a list of substitute and conforming items that may be in inventory. If items in inventory that comport with the profile are in stock, and a match is determined in step 510, items that conform to the purchase preferences are marked for purchase in step 506. If there is not matching items in inventory as a result of a test of step 510, an advisory or other message can be prepared for the consumer in step 512 to apprise him or her that at least some item in the list of preferences and lists of required purchases is not available. Once the items are marked for purchase in step 506, the consumer's list of preferences and the list of required purchases can be checked and if all items on both lists are accounted for, in step 514, an output list can be prepared after the output list is sorted by the location of the goods in the physical store generating a list of items for purchase in the order in which they would appear to a consumer entering the store at one particular location. Once this list is printed in step 518 it can be sent by e-mail or printed locally or in the store for use by the consumer. In addition to printing the list, sorted by location, coupons, rebates or other forms of purchase money vouchers can be sent to the consumer's PDA electronically for an electronic redemption (via an infrared or Bluetooth protocol data transfer) or printed locally (at the consumer's discretion) for redemption.

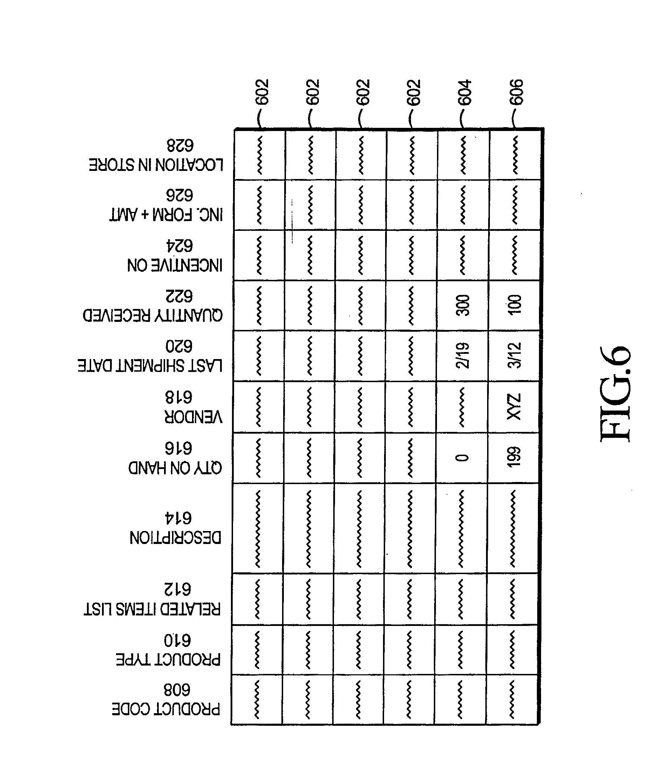

Figure 6 depicts a simplified representation of a database record or data structure for use by either the retailer's computer 106 or the manufacturer's computer 108. Database records 602, 604 and 606 include several distinct pieces of data related to items in inventory of the retailer. A product code 608 can be a multi-digit numerical identification of the various products that might be regularly kept in inventory. A product type identified in field 610 might be used to indicate perishable items, dry goods, dairy products and so forth. A related items list 612 is a link to related lists or database items that are related to the item identified in the product code field 608. By way of example if the product code 608 were that of ketchup, related items might be other condiments or foods that would be typically consumed with the ketchup according to local preferences, local tastes or cultural preferences of the consumers that frequent the establishment.

A field description 614 can provide an English language description of the item identified by the product code 608. Field 616 can contain a numeric count of items on hand or in inventory presently. Field 618 identifies the vendor or merchant from which the item identified in 608 was obtained.

The last shipment date can be denoted in field 620 and the item received on that date in field 622. Any sort of sales incentive that might be in place as of the date the record was last updated can be indicated in field 624 as well as the amount of that incentive and how it is to be paid out or realized in field 626. Finally, in field 628 the location of the item identified by product code 608 can be identified by some geographic or xy coordinate system in field 628.

It can be seen in Figure 6 that the database item 604 is shown as having a zero quantity on hand the last shipment received on February 19 and on which date three hundred items were received. Similarly, database record 606 shows that ninety-nine items of a particular quantity obtained from vendor xyz were last received on March 12 on which one hundred items were received.

It can be seen in Figure 6 that fields can be added to the records by which certain characteristics of the item can be stored. The data base record shown in Figure 6 can be structured to include fields for price, packaging, size, color, manufacturing and other data that would be used in the profile described above. Once the data base records of items are consistent with criteria used or specified in the profile, reading a profile and finding data base records that are consistent becomes a matter of processor speed sorting through the records of items in inventory to identify the inventory item that most closely (or exactly) comports with the profile.

Using the data such as that shown in Figure 6, which can be readily updated by the merchant's computer 106 or the manufacturer's computer 108, it is possible to update inventory as those inventory items are requested for purchase by a consumer. Slow moving items can be identified by tracking sales rates as well as quantity on hand and the last shipment. Items that rotate slowly that are out of season can be discontinued from an inventory reducing the retailer's and the manufacturer's cost of inventory on hand.

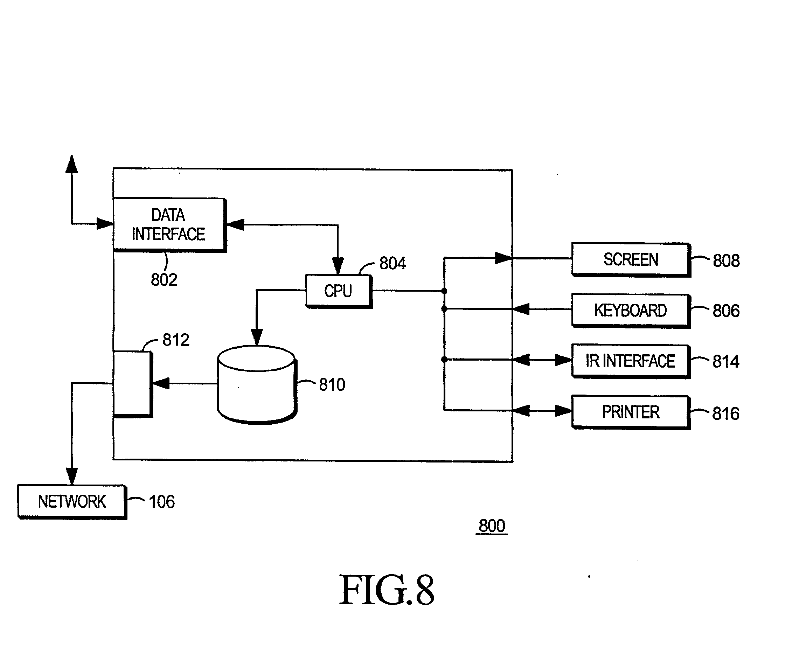

Figure 8 shows a simplified block diagram of a kiosk or consumer terminal for use inside of a retail establishment. A data interface 802 can be coupled to a data network such as the data network 102 shown in Figure 1. A consumer's list of preferences or required items can be downloaded directly to the central processing unit 804. Alternatively, user input from a keyboard 806 and display on a screen 808 can be used to generate a list of consumer preferences or list of required items directly in the store using the terminal 800.

Database records can be stored locally in the disk drive or tape drive as appropriate 810 and uploaded to the retailer's computer 106 by way of a Intranet or local area network interface 812.

If a consumer is able to build a shopping list using the CPU and database records 804 and 810, an infrared interface will allow the data compiled to be transmitted directly to the personal digital assistant 114 of the consumer for use directly in the store. Alternatively a hard copy or printout can be generated on a local printer 816 printed in the order requested by the consumer for example in the way that the products are laid out in the store or some other preference set by the user.

## Claims

1. A method of managing consumer purchasing data comprised of the steps of:
obtaining via a data network a first list (306) that is at least one of:
a list of consumer required purchases and
a list of consumer specified purchase preference items to be purchased by a consumer;
comparing items in said first list (314) to items in inventory;
generating, in response to said step of comparing, a second list of items (316), said second list including at least one item that is at least:
1) on said first list;
2) conforming to at least one of said consumer-specified preferences;
3) related to at least one item on said consumer list;
4) is a promoted inventory item on or related to or on said list of preference items;
generating a third list (350) of items in inventory and available for purchase by said consumer according to said preferences.

2. A method of managing consumer purchasing data comprised of the steps of:
obtaining a first list of purchase preferences of a consumer via a data network (306);
obtaining a second list of items previously purchased by said consumer via a data network (306);
comparing said first and second lists (314);
rendering to said consumer in response to said comparison step via said data network, a purchase money voucher (coupon) for items on both said first list and said second list (340).

3. A method of managing consumer purchasing data comprised of the steps of:
obtaining a purchasing profile of a consumer via a data network (502);
rendering to said consumer via said data network, a purchase money voucher (coupon) for at least one item that fits within said purchasing profile of said consumer (518).

4. A method of managing consumer purchasing data comprised of the steps of:
obtaining a purchasing profile of a consumer via a data network (502);
generating a list of items to be purchased by said consumer, which is consistent with said purchasing profile (506).

5. A method of managing consumer purchasing data comprised of the steps of:
obtaining a purchasing profile of a consumer via a data network (502);
generating a list of items to be purchased by said consumer, which is consistent with said purchasing profile (506);
rendering to said consumer via said data network, a purchase money voucher (coupon) for at least one item that fits within said purchasing profile of said consumer (518).

6. A method of managing inventory using consumer purchasing data comprised of the steps of:
obtaining a purchasing profile of a consumer via said data network (502);
generating a list of items to be purchased by said consumer, which is consistent with said purchasing profile (510);
adjusting at least one of either the number or the identity of items in inventory in response to said list of items to be purchased by said consumer (318).

7. A method of managing sales of consumer goods data comprised of the steps of:
obtaining a first list of items purchased by a consumer (320);
obtaining a second list of items purchased by said consumer (326);
comparing said first and second lists (326);
determining from said step of comparing, a purchasing profile of the purchasing practice of said consumer (412);
rendering a purchase money voucher (coupon) for at least one item that is consistent with said purchasing profile of said consumer.

8. Apparatus (800) for managing consumer purchasing data comprised of:
data network interface (802, 812) means for receiving via a data network (102), a data file (110) containing a consumer list of required purchases and a file of consumer-specified purchase preference items;
means for comparing items in said consumer list to said consumer-specified purchase preferences (804);
means for generating (804), a second list of items to be purchased that contains at least one element that is either:
on said consumer list;
compliant with said purchase preferences;
a product related to an item on said list or related to said purchase preferences;
generating a third list of items in inventory and available for purchase by said consumer according to said preferences;

9. Apparatus (800)for managing consumer purchasing data comprised of:
data network interface (802, 812) means for receiving via a data network, a data file containing a consumer list of required purchases and a file of consumer-specified purchase preference items;
means for comparing items in said consumer list to said consumer-specified purchase preferences (804);
means for generating, a second list of items to be purchased that contains at least one element that is either (804):
on said consumer list;
compliant with said purchase preferences;
a product related to an item on said list or related to said purchase preferences;
generating a third list of items in inventory and available for purchase by said consumer according to said preferences;
means (804) for sending via said data network (102) a purchase money voucher for at least one item on said consumer list or compliant with said purchase preferences.

10. Apparatus (800) for collecting consumer purchasing data comprised of:
a user interface means (806, 808) for receiving data that identifies at least one of: required purchases and consumer purchase preferences;
means (804) for comparing items in said consumer list to said consumer-specified purchase preferences;
means (804) for generating, a second list of items to be purchased that contains at least one element that is at least one of:
on said consumer list and
compliant with said purchase preferences;
generating a display of items in inventory and available for purchase by said consumer according to said preferences;
means (802, 812) for receiving via said data network a purchase money voucher for at least one item on said consumer list or compliant with said purchase preferences.
